# EUROPÄISCHE PATENTANMELDUNG

(11) **EP 3 323 588 A2**
(43) Veröffentlichungstag der Anmeldung: **23.05.2018**
(21) Anmeldenummer: 17202114.9
(22) Anmeldetag: 16.11.2017
(51) Int. Cl.: B29C 47/66, B29C 47/38, B29C 47/08, B29B 7/42, B29C 47/60

(54) **STIFT-EXTRUDER**

(30) Priorität: 18.11.2016 DE 102016122277
(71) Anmelder: TROESTER GmbH & Co. KG, 30519 Hannover (DE)
(72) Erfinder: ZABEL, Matthias, 29323 Wieckenberg (DE); ZELLERÖHR, Michael, 30629 Hannover (DE)
(74) Vertreter: Scheffler, Jörg

(57) **Zusammenfassung**

Die Erfindung betrifft einen Stift-Extruder mit einer Förderschnecke (9) für die Förderung von Kunststoffen, Kautschuk oder dergleichen. Zur besseren Durchmischung ist der Stift-Extruder mit mehreren, in einer jeweiligen Stiftreihe (1-8) angeordneten Stiften (I-VIII) ausgestattet. Die Stiftreihen (1-8) sind in Förderrichtung (10) der Förderschnecke (9) derart angeordnet, dass der Abstand (A1-A7) der Ebenen in Förderrichtung (10) von Ebene zu Ebene zunimmt und der Durchmesser (D1-D8) der Stifte (I-VIII) abnimmt, um so eine effizientere Plastifizierung der zugeführten Mischung zu erreichen. Indem die Stifte (I-VIII) über den Umfang der Förderschnecke (9) mit unterschiedlichen Winkelstellungen versetzt angeordnet sind und diese bei einer Drehung der Förderschnecke (9) zeitlich nacheinander einen jeweils zugeordneten, nicht dargestellten Stegdurchbruch der Förderschnecke (9) passieren, wird zudem eine wesentlich verbesserte Laufruhe erreicht.

## Beschreibung

Die Erfindung betrifft einen Stift-Extruder mit einer Förderschnecke für die Förderung von Kunststoffen, insbesondere Elastomeren oder Kautschuk, mit mehreren, in einer jeweiligen Stiftreihe angeordneten Stiften, wobei die Stiftreihen in mehreren, in Förderrichtung der Förderschnecke aufeinanderfolgenden Ebenen angeordnet sind.

Stiftextruder und ihre Vorteile gegenüber anderen kaltgefütterten Maschinen hinsichtlich Durchsatzleistung und Energieverbrauch sind seit langem bekannt. In der Kautschuk verarbeitenden Industrie werden, insbesondere ab einem Förderschneckenaußendurchmesser größer als 120 mm, Stiftextruder eingesetzt. Extruder dieser Bauart sind beispielsweise aus der DE 22 35 784 C3 und DE 30 03 615 C2 bekannt.

Die Stifte erstrecken sich zur Förderschnecke hin und sind gehäusefest, wobei die Förderschneckenstege der Förderschnecke je Durchbrechungen aufweisen, die das Durchtreten des betreffenden Stiftes auf dieser axialen Höhe ermöglichen.

Mit diesem Extrudertyp werden höhere Ausstoßleistungen respektive Massedurchsätze bei gleichzeitig guter Homogenität des extrudierten Produktes im Vergleich zu konventionellen kalt gefütterten Kautschuk-Extrudern ohne Stifte erreicht.

Auch wenn vielfach angenommen wird, dass der höhere Durchsatz eines derartigen Stift-Extruders im Vergleich zu einem Extruder ohne Stifte darauf zurückzuführen ist, dass die Rotationsströmung im Förderschneckenkanal behindert wird, zeigen nähere Untersuchungen, dass der Durchsatzgewinn an sich aus der zunehmenden Relativgeschwindigkeit zwischen den ortsfesten Stiften einerseits und den rotierenden Förderschneckenflanken andererseits resultiert. Es wird praktisch das Extrudat ständig vor den Stiften her geschoben und durch die Durchbrechungen in den Förderstegen förderwirksam partiell in Richtung Extrusionsdüse gedrückt, und zwar in dem stromab liegenden Teilbereich des dort geförderten Extrudats.

Neben den üblichen Ausführungen sind Stiftextruder mit verbesserten Eigenschaften und Funktionen bekannt. Bei einem Extruder nach der DE 8 79 913 dienen die Stifte der Erzeugung von Stauflächen, mit deren Hilfe der Widerstand für das geförderte Material geregelt werden kann.

Die Stifte in einem Extruder nach der DE 35 34 097 A1 haben die zusätzliche Aufgabe, ein Anlaufen der Förderschneckenstege an der Wandung des Extrudergehäuses zu vermeiden.

Ferner ist es auch bekannt geworden, die Stifte förderschneckenfest anzuordnen und insofern eine kinematische Umkehr vorzunehmen. Hierzu sei beispielsweise auf die DE 71 03 071 verwiesen. Bei dieser Lösung kämmen zwei unterschiedlich angeordnete und ausgebildete Stiftanordnungen miteinander. Hierbei ist nachteilig, dass dort keine Förderwirkung entsteht, während die Mischwirkung dieser Förderschnecken gut ist. Andererseits ist diese Lösung nur für Doppelschnecken-Extruder geeignet.

Eine ähnliche Lösung, die grundsätzlich auch für Einfach-Extruder geeignet ist, ist aus der DE 26 50 248 bekannt. Bei dieser Lösung laufen Stiftreihen in einer Art Ringnuten, die jedoch nicht durchgängig sind, sondern durch eine Vielzahl von einwärts sich erstreckenden Vorsprüngen gebildet sind. Auch hier entsteht praktisch keine Förderwirkung, jedoch eine starke Durchmischung, wie sie für die Plastifizierung und Homogenisierung des Extrudats wünschenswert ist.

Ein Nachteil der bekannten Stift-Extruder besteht darin, dass eine Vielzahl von Stiften erforderlich ist, sodass der Strömungskanal durch die Stiftquerschnitte stark eingeengt wird. Dies erzeugt einen recht großen Druckverlust, sodass der Vorteil des Stift-Extruders hinsichtlich des Durchsatzgewinnes hier durch den hohen Druckabfall in der Stiftzone und dem damit einhergehenden Durchsatzverlust wieder kompensiert wird.

Ausgehend von diesem Stand der Technik liegt der Erfindung die Aufgabe zugrunde, einen Stiftextruder zu schaffen, welcher hinsichtlich der Extrusionstemperatur, Durchsatz und Herstellkosten gegenüber dem Stand der Technik wesentlich verbessert ist.

Diese Aufgabe wird erfindungsgemäß mit einem Stiftextruder gemäß den Merkmalen des Anspruches 1 gelöst. Die weitere Ausgestaltung der Erfindung ist den Unteransprüchen zu entnehmen.

Erfindungsgemäß ist also ein Stiftextruder vorgesehen, bei dem der Abstand der Ebenen zumindest einzelner Stiftreihen in Förderrichtung zwischen einem Einlass und einem Auslass der Förderschnecke unterschiedlich ist, zumindest ein Stift einer ersten Stiftreihe einer ersten Ebene eine geringe Querschnittsfläche, insbesondere einen geringeren Durchmesser, aufwiesen, als zumindest ein Stift einer von einem Auslass geringer beabstandeten zweiten Stiftreihe einer in Förderrichtung hinter der ersten Ebene liegenden zweiten Ebene und/oder die Stifte über den Umfang der Förderschnecke derart verteilt mit unterschiedlichen Winkelstellungen angeordnet sind, dass zumindest einzelne Stifte bei einer Drehung der Förderschnecke zeitlich nacheinander, also insbesondere nicht gleichzeitig, einen jeweils zugeordneten Stegdurchbruch der Förderschnecke passieren.

Im Vergleich zu den aus dem Stand der Technik bekannten Stiftextrudern nimmt der Stiftebenenabstand in Förderrichtung zumindest zwischen einigen der Stiftebenen zu, wobei selbstverständlich auch zwei überstimmende Stiftebenenabstände oder auch eine verringerter Abstand zweier aufeinander folgender Stiftebenen von dem Gegenstand der Erfindung umfasst ist.

Dabei kann die Anzahl der Stiftebenen zwischen dem Einlass und dem Auslass des Extruders gegenüber dem Stand der Technik ebenfalls vermindert sein oder aber unverändert erhalten bleiben, sodass sich ein im Vergleich zum Stand der Technik benachbarter zu dem Einlass geringerer Stiftebenenabstand und benachbart zu dem Auslass größerer Stiftebenenabstand ergibt.

Zugleich oder alternativ wird auch die Querschnittsform der Stifte zwischen verschiedenen Stiftreihen variiert. So hat sich gezeigt, dass ein in seiner Querschnittsfläche größerer Stift im Einzugsbereich der Förderschnecke im Vergleich zu den Stiften in Förderrichtung nachfolgenden Stiftreihen zu einer wesentlich verbesserten Plastifizierleistung bei übereinstimmender oder unterschiedlicher radialer Länge der Stifte führt.

Darüber hinaus sind die Stifte der unterschiedlichen Stiftebenen mit einem Winkelversatz bezogen auf die Förderschneckenachse angeordnet, sodass diese im Betrieb des Extruders bei rotierender Förderschnecke nicht zeitgleich, sondern zeitlich versetzt den jeweiligen Stegdurchbruch erreichen bzw. passieren. Hierdurch wird eine optimale Extruderlaufruhe, insbesondere durch Vermeidung von Druckstößen erreicht und der auftretende Verschleiß der Förderschnecke.

Obwohl jede der vorstehend genannten Ausgestaltungen des Extruders bereits für sich genommen erhebliche Vorteile bietet, führt insbesondere die Kombination der Verschiedenen Maßnahme zu einem überraschend vorteilhaften Effekt.

Durch die Mehrzahl der Stifte im Einzugsbereich bzw. im Anschluss an den Einzugsbereich der Förderschnecke wird eine effizientere Plastifizierung der zugeführten Mischung erreicht. Bedingt durch die vergrößerte maximale Querschnittsfläche bzw. des Volumens der Stifte, die dem Einlass benachbarten Stiftreihen kann die Plastifzierleistung noch intensiviert werden, sodass auch bei einer Reduzierung der Anzahl der Stiftreihen keine Beeinträchtigung bei der Homogenisierung zu befürchten ist.

Die Erfindung beruht auf der Erkenntnis, dass die Plastifzierleistung insbesondere bei zylindrischen Stiften eine Funktion der Querschnittsfläche, insbesondere des Durchmessers ist und mit diesem proportional zunimmt.

Der damit einhergehende Durchsatzverluste durch den größeren Stegdurchbruch ist zu vernachlässigen, da dieser einlassnahe Bereich weit beabstandet ist von dem auslasseitigen Ende der Förderschnecke und vergleichsweise wenig von der Druckströmung betroffen ist. Zudem ist die Förderschnecke in diesem Bereich noch nicht zu 100 % gefüllt.

Es wird derzeit sogar davon ausgegangen, dass die entsprechend vergrößerten Stegdurchbrüche zu einer positiven Auswirkung auf das Einzugsverhalten führen, weil dadurch der zugeführten Mischung mehr Raum zur Verfügung steht.

Gleichzeitig führt eine geringere Anzahl von Stiftreichen und abnehmende Größen der Stegdurchbrüche zu einer Reduzierung der Druckströmung, insbesondere im Bereich einer Förderschneckenspitze, sodass der Anteil an Schleppströmung und dadurch der Durchsatz zunimmt. Die Plastifzierung spielt in Richtung der Förderschneckenspitze nur noch eine untergeordnete Rolle und ist vorzugsweise im Anschluss an die letzte Stiftreihe bereits abgeschlossen.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils in einer Prinzipdarstellung in
- Fig. 1: eine Seitenansicht einer Förderschnecke eines Stiftextruders mit mehreren in Stiftreihen angeordneten Stiften;
- Fig. 2: ein Phasendiagramm bezogen auf den Durchgang der Stifte durch einen jeweiligen Stegdurchbruch der Förderschnecke.

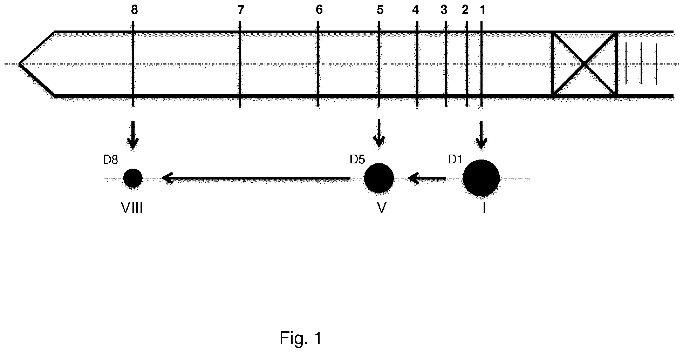

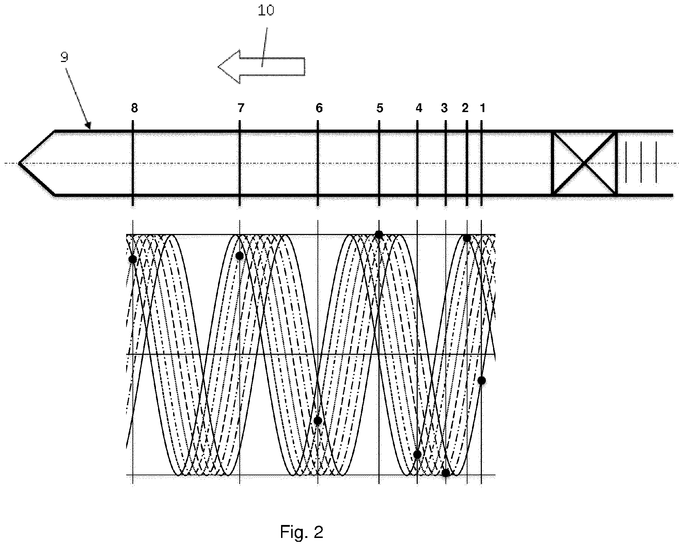

Der erfindungsgemäße Stift-Extruder wird nachstehend anhand der Figuren 1 und 2 näher erläutert. Der Stift-Extruder hat eine Förderschnecke 9 für die Förderung von Kunststoffen, insbesondere Elastomeren, Kautschuk oder dergleichen. Zur besseren Durchmischung ist der Stift-Extruder mit mehreren, in einer jeweiligen Stiftreihe 1 bis 8 angeordneten Stiften I bis VIII ausgestattet. Die Stiftreihen 1 bis 8 sind in Förderrichtung 10 der Förderschnecke 9 derart angeordnet, dass der Abstand A1 bis A7 der Ebenen in Förderrichtung 10 von Ebene zu Ebene zunimmt.

Wie in Figur 1 erkennbar nimmt dementsprechend auch der Durchmesser D1 bis D8 der hier zylindrischen Stifte in Förderrichtung 10 von Ebene zu Ebene ab, um so eine effizientere Plastifizierung der zugeführten Mischung zu erreichen.

Weiterhin sind die Stifte I bis VIII über den Umfang der Förderschnecke 9 mit unterschiedlichen Winkelstellungen versetzt angeordnet, dass zumindest einzelne Stifte I bis VIII bei einer Drehung der Förderschnecke 9 zeitliche nacheinander einen jeweils zugeordneten, nicht dargestellten Stegdurchbruch der Förderschnecke 9 passieren, wie dies in dem in der Figur 2 gezeigten Phasendiagramm bezogen auf den Durchgang der Stifte I bis VIII durch einen jeweiligen Stegdurchbruch der Förderschnecke 9 verdeutlich ist. Im dargestellten Beispiel passieren die Stifte I bis VIII der verschiedenen Stiftreihen 1 bis 8 den jeweiligen zugeordneten Stegdurchbruch in der Reihenfolge 1-6-3-5-4-7-2-8.

### BEZUGSZEICHENLISTE

- 1: Stiftreihe
- 2: Stiftreihe
- 3: Stiftreihe
- 4: Stiftreihe
- 5: Stiftreihe

- 6: Stiftreihe
- 7: Stiftreihe
- 8: Stiftreihe
- 9: Förderschnecke
- 10: Förderrichtung

- I bis VIII: Stift
- A1 bis A7: Abstand
- D1 bis D8: Durchmesser

## Patentansprüche

1. Stift-Extruder mit einer Förderschnecke (9) für die Förderung von Kunststoffen, insbesondere Elastomeren oder Kautschuk, mit mehreren, in einer jeweiligen Stiftreihe (1-8) angeordneten Stiften (I-VIII), wobei die Stiftreihen (1-8) in mehreren in Förderrichtung (10) der Förderschnecke (9) aufeinanderfolgenden Ebenen angeordnet sind, **dadurch gekennzeichnet, dass** der Abstand (A1-A7) der Ebenen zumindest einzelner Stiftreihen (1-8) in Förderrichtung (10) der Förderschnecke (9) unterschiedlich ist.

2. Stift-Extruder nach Anspruch 1, **dadurch gekennzeichnet, dass** der Abstand (A1-A7) der Ebenen zumindest einzelner Stiftreihen (1-8) in Förderrichtung (10) der Förderschnecke (9) zunimmt.

3. Stift-Extruder mit einer Förderschnecke (9) für die Förderung von Kunststoffen, insbesondere Elastomeren oder Kautschuk, mit mehreren, in einer jeweiligen Stiftreihe (1-8) angeordneten Stiften (I-VIII), wobei die Stiftreihen (1-8) in mehreren in Förderrichtung (10) der Förderschnecke (9) aufeinanderfolgenden Ebenen angeordnet sind, **dadurch gekennzeichnet, dass** zumindest ein Stift (I-VIII) einer ersten Stiftreihe (1-8) einer ersten Ebene eine geringe Querschnittsfläche, insbesondere einen geringeren Durchmesser (D1-D8) aufweist, als zumindest ein Stift (I-VIII) einer von einem Auslass geringer beabstandeten zweiten Stiftreihe (1-8) einer in Förderrichtung (10) hinter der ersten Ebene liegenden zweiten Ebene.

4. Stift-Extruder mit einer Förderschnecke (9) für die Förderung von Kunststoffen, insbesondere Elastomeren oder Kautschuk, mit mehreren, in einer jeweiligen Stiftreihe (1-8) angeordneten Stiften (I-VIII), wobei die Stiftreihen (1-8) in mehreren in Förderrichtung (10) der Förderschnecke (9) aufeinanderfolgenden Ebenen angeordnet sind, **dadurch gekennzeichnet, dass** die Stifte (I-VIII) über den Umfang der Förderschnecke (9) derart verteilt angeordnet sind, dass zumindest einzelne Stifte (I-VIII) bei einer Drehung der Förderschnecke (9) zeitliche nacheinander einen jeweils zugeordneten Stegdurchbruch der Förderschnecke (9) passieren.

5. Stift-Extruder nach zumindest einem der vorhergehenden Ansprüche, **dadurch gekennzeichnet, dass** die Stifte (I-VIII) derart verteilt angeordnet sind, dass der zeitliche Abfolge beim Passieren des Stegdurchbruches einer festen, insbesondere konstanten Abfolge folgt.

6. Stift-Extruder nach zumindest einem der vorhergehenden Ansprüche, **dadurch gekennzeichnet, dass** die Stiftreihen (1-8) jeweils in einer Querschnittsebene zu der Förderschnecke (9) angeordnet sind.

7. Stift-Extruder nach zumindest einem der vorhergehenden Ansprüche, **dadurch gekennzeichnet, dass** die Stifte (I-VIII) in Bezug auf die Winkelstellung der Stegdurchbrüche der Förderschnecke (9) gleichverteilt über den Umfang der Förderschnecke (9) angeordnet sind.

8. Stift-Extruder mit den Merkmalen eines oder mehrerer der vorhergehenden Ansprüche.
